# EUROPÄISCHE PATENTSCHRIFT

(11) **EP 2 857 247 B1**
(45) Veröffentlichungstag und Bekanntmachung des Hinweises auf die Patenterteilung: **26.09.2018**
(21) Anmeldenummer: 13186817.6
(22) Anmeldetag: 01.10.2013
(51) Int. Cl.: B60K 35/00, B60W 30/17, B60W 50/14

(54) **Verfahren und Vorrichtung für ein zur automatischen Längsführung ausgestaltetes Fahrzeug**
Method and device for a vehicle designed for automatic linear guidance
Procédé et dispositif pour un véhicule conçu pour le guidage longitudinal automatique

(43) Veröffentlichungstag der Anmeldung: 08.04.2015
(73) Patentinhaber: Volkswagen Aktiengesellschaft, 38440 Wolfsburg (DE); Scania CV AB, 151 87 Södertälje (SE)
(72) Erfinder: Kleen, Andro, 47057 Duisburg (DE); Schaefer, Helge, 38104 Braunschweig (DE); Ricknäs, Daniel, 11664 Stockholm (SE); Rhede, Johannes, 10557 Berlin (DE); Meinecke, Marc-Michael, 38524 Sassenburg (DE)
(74) Vertreter: Sticht, Andreas

(56) Entgegenhaltungen:
- WO-A1-2011/108091
- DE-A1- 19 539 799
- DE-A1-102005 022 676
- DE-A1-102008 061 649
- FR-A1- 2 927 699

## Beschreibung

Die vorliegende Erfindung betrifft ein Verfahren und eine Vorrichtung für ein Fahrzeug, welches für eine automatische Längsführung und/oder zum automatischen Fahren ausgestaltet ist.

Die DE 10 2005 022 676 A1 beschreibt eine Anzeigevorrichtung für einen Geschwindigkeitsregler mit Stop & Go Funktion. Durch das Aufleuchten von zwei Signallampen in Verbindung mit der Stellung der Tachonadel wird angezeigt, dass sich ein System in einem Zustand befindet, in dem eine Abstandsregelung auf ein Zielobjekt erfolgt. Wenn ein Stillstand des Fahrzeugs länger als etwa 5 Sekunden dauert, geht das System in einen Zustand "Stillstand, fahrerbestätigtes Anfahren" über, was durch das Erlöschen einer der beiden Signallampen angezeigt wird. Wenn sich in diesem Zustand das Führungsfahrzeug wieder in Bewegung setzt, beginnt die andere der beiden Signallampen an zu blinken.

Die DE 10 2007 029 482 A1 offenbart ein Fahrerassistenzsystem zur Regelung der Geschwindigkeit des eigenen Fahrzeugs, welches bei Erkennung einer Anfahrsituation einen optischen, akustischen und/oder haptischer Anfahrhinweis ausgibt.

Fahrzeuge, welche zur automatischen Längssteuerung oder zum automatischen Fahren ausgestaltet sind, befinden sich bereits im Markt oder sind zumindest in Planung. Insbesondere in Phasen, in denen eine solche ein Fahrzeug automatisch steuernde Funktion neu in den Markt eingeführt wird oder wenn ein Fahrer zum ersten Mal mit einer solchen Funktion in Berührung kommt, ist es besonders wichtig, dem Fahrer ein angemessenes Verständnis und Vertrauen in diese Funktion zur möglichen.

Daher stellt sich die vorliegende Erfindung die Aufgabe, einem Fahrer dieses angemessene Verständnis und das Vertrauen in eine Funktion, durch welche die automatische Längssteuerung eines Fahrzeugs bewerkstelligt wird, besser bereitzustellen, als dies nach dem Stand der Technik der Fall ist.

Erfindungsgemäß wird diese Aufgabe durch eine Vorrichtung nach Anspruch 1 und durch ein Verfahren nach Anspruch 5 gelöst. Die abhängigen Ansprüche definieren bevorzugte und vorteilhafte Ausführungsformen der vorliegenden Erfindung.

Im Rahmen der vorliegenden Erfindung wird eine Vorrichtung für ein Fahrzeug bereitgestellt, wobei das Fahrzeug zur automatischen Längssteuerung ausgestaltet ist. Dabei umfasst die Vorrichtung einen Sensor, eine Steuerung und eine Anzeige. Der Sensor ist ausgestaltet, um ein Führungsfahrzeug zu erfassen. Dabei wird unter einem Führungsfahrzeug ein Fahrzeug verstanden, welches insbesondere in derselben Fahrspur wie das Fahrzeug direkt vor dem Fahrzeug herfährt. Die Vorrichtung ist ausgestaltet, um in Abhängigkeit von Ergebnissen oder Ausgaben des Sensors einen von mehreren Zuständen zu bestimmen und um diesen aktuellen Zustand in animierter Form auf der Anzeige darzustellen, so dass er von den anderen dieser Zustände unterschieden werden kann. Dabei beschreiben die Zustände eine aktuelle Reaktion des Fahrzeugs auf das Führungsfahrzeug.

Unter der Längssteuerung wird dabei die Steuerung der Geschwindigkeit des Fahrzeugs verstanden, wobei die Längssteuerung auch Vorgänge, wie das Anfahren des Fahrzeugs oder das Abbremsen des Fahrzeugs (bis in den Stillstand), umfasst. Ein Fahrzeug, welches automatisch (d.h. ohne jegliche manuelle Betätigung seitens des Fahrers) fährt, ist damit zwangsläufig auch zur automatischen Längssteuerung ausgestaltet, so dass die erfindungsgemäße Vorrichtung auch bei einem Fahrzeug eingesetzt werden kann, welches zum automatischen Fahren ausgestaltet ist. Bei dem Sensor der Vorrichtung kann es sich erfindungsgemäß auch um mehrere Sensoren unterschiedlichen Typs (beispielsweise um eine Stereokamera, ein Radar und einen Ultraschall-Sensor) handeln.

Anders ausgedrückt kann der jeweilige Zustand als Zustand eines Systems zur automatischen Längsführung des Fahrzeugs oder als Zustand eines Systems zum automatischen Fahren des Fahrzeugs angesehen werden. Dieser Zustand des Systems beschreibt demnach die aktuelle Reaktion des Systems und damit des Fahrzeugs auf das Führungsfahrzeug.

Indem einer von mehreren Zuständen, welche jeweils die aktuelle Reaktion des Fahrzeugs auf das Führungsfahrzeug beschreiben, in animierter Form auf der Anzeige dargestellt wird, kann sich der Fahrer vorteilhafterweise rasch einen Überblick über die aktuelle Fahrsituation seines Fahrzeugs verschaffen. Dies gilt insbesondere dann, wenn die automatische Längsführung oder das automatische Fahren des Fahrzeugs ausgelegt ist, um ausschließlich diesem Führungsfahrzeug zu folgen.

Dabei umfassen die Zustände zumindest Zustände aus einer Zustandsgruppeumfassend:
- Das Fahrzeug folgt dem Führungsfahrzeug mit konstanter oder sich erhöhender Geschwindigkeit. In diesem Zustand fährt das Fahrzeug bereits und bremst nicht ab. Die automatische Längsregelung ist aktiviert.
- Das Fahrzeug folgt dem Führungsfahrzeug mit sinkender Geschwindigkeit. In diesem Zustand fährt das Fahrzeug ebenfalls bereits, wobei seine Geschwindigkeit allerdings beispielsweise aufgrund eines Bremsvorgangs unter Umständen bis zum Stillstand sinkt. Die automatische Längsregelung ist aktiviert.
- Das Fahrzeug wird dem aktuell stehenden Führungsfahrzeug folgen, sobald sich das Führungsfahrzeug in Bewegung setzt. In diesem Zustand steht das Fahrzeug, wird allerdings automatisch losfahren, sobald das Führungsfahrzeug anfährt. Die automatische Längsregelung ist aktiviert.
- Das Fahrzeug wird dem sich gerade in Bewegung setzenden Führungsfahrzeug folgen. In diesem Zustand steht das Fahrzeug ebenfalls, allerdings hat sich das Führungsfahrzeug in Bewegung gesetzt, so dass das Fahrzeug in Kürze dem Führungsfahrzeug folgen wird. Die automatische Längsregelung ist aktiviert.

Erfindungsgemäß könnte die Zustandsgruppe auch den Zustand umfassen, dass die automatische Längsregelung nicht aktiviert ist.

Darüber hinaus kann die Vorrichtung mit Hilfe des Sensors einen Abstand zwischen dem Führungsfahrzeug und dem Fahrzeug ermitteln und diesen Abstand auf der Anzeige darstellen.

Die Darstellung des Abstands zwischen dem Fahrzeug in Führungsfahrzeug ermöglicht dem Fahrer vorteilhafterweise einen einfachen Abgleich der realen Fahrsituation mit der vom automatisch geführten Fahrzeug erfassten Situation.

Insbesondere ist die erfindungsgemäße Vorrichtung ausgestaltet, um das Führungsfahrzeug und das Fahrzeug hintereinander in animierter Form auf der Anzeige darzustellen. Dabei stellt die Vorrichtung das Fahrzeug in Form eines Symbols dar, welches den aktuellen Zustand beschreibt.

Mit anderen Worten wird das Führungsfahrzeug vor dem Fahrzeug dargestellt, wobei sowohl das Führungsfahrzeug als auch das Fahrzeug in animierter Form abgebildet werden. Abhängig davon, ob die erfindungsgemäße Vorrichtung zwei, drei oder vier der vorab beschriebenen Zustände darstellen kann, existieren entsprechend viele Symbole, um den aktuellen Zustand anhand des Symbols unterscheidbar von den anderen Zuständen darzustellen. Die Darstellung des eigenen Fahrzeugs in Form des den aktuellen Zustand beschreibenden Symbols ist vorteilhafterweise eine sehr kompakte Darstellung, welche dem Fahrer die rasche Erfassung der aktuellen Fahrsituation ermöglicht.

Gemäß einer bevorzugten erfindungsgemäßen Ausführungsform ist die Vorrichtung ausgestaltet, um einen direkt an das Führungsfahrzeug angrenzenden und in Richtung des Fahrzeugs liegenden Bereich auf der Anzeige als so genannten Sicherheitsbereich kenntlich zu machen, welcher einen Mindestabstand des Fahrzeugs, dessen automatische Längssteuerung aktiv ist, kennzeichnet.

Es sei nochmals darauf hingewiesen, dass bei einem Fahrzeug, welches automatisch gefahren wird, zwangsläufig auch die automatische Längsführung des Fahrzeugs aktiviert ist.

Der Sicherheitsbereich kennzeichnet einen Bereich, in welchen das Fahrzeug, dessen automatische Längssteuerung aktiv ist, nie eindringen wird. Damit wird vorteilhafterweise verdeutlicht, dass das hinsichtlich seiner Längssteuerung automatische agierende Fahrzeug einen festgelegten Sicherheitsabstand, welcher durch den Sicherheitsbereich kenntlich gemacht ist, nicht unterschreiten wird.

Im Rahmen der vorliegenden Erfindung wird auch ein Verfahren für ein Fahrzeug, welches zur automatischen Längssteuerung ausgestaltet ist, bereitgestellt. Dieses Verfahren umfasst folgende Schritte:
- Erfassen (mit einem oder mit mehreren Sensoren) eines Führungsfahrzeug.
- Bestimmen eines aktuellen Zustands, welcher eine aktuelle Reaktion des Fahrzeugs auf das Führungsfahrzeug beschreibt. Dabei wird einer von mehreren (mindestens zwei) Zuständen bestimmt.
- Darstellen des aktuellen Zustands in einer von den anderen Zuständen unterscheidbaren und animierten Form auf einer Anzeige (beispielsweise des Fahrzeugs oder eines Mobilgeräts).

Die Vorteile des erfindungsgemäßen Verfahrens entsprechen im Wesentlichen den Vorteilen der erfindungsgemäßen Vorrichtung, welche vorab im Detail ausgeführt sind, so dass hier auf eine Wiederholung verzichtet wird.

Die Zustände, welche von dem erfindungsgemäßen Verfahren bestimmt und unterscheidbar dargestellt werden, umfassen die Zustände der vorab beschriebenen Zustandsgruppe.

Im Rahmen der vorliegenden Erfindung kann auch ein Fahrzeug bereitgestellt werden, welches die erfindungsgemäße Vorrichtung umfasst.

Die vorliegende Erfindung ist insbesondere für Kraftfahrzeuge, welche zur automatischen Längssteuerung oder zum automatischen Fahren ausgestaltet sind, geeignet. Darüber hinaus kann die vorliegende Erfindung allerdings auch für gleisgebundene oder spurgeführte Fahrzeuge sowie für Schiffe oder Flugzeuge eingesetzt werden.

Durch die vorliegende Erfindung wird ein Fahrer eines Fahrzeugs, welches zur automatischen Längssteuerung oder gar zum automatischen Fahren ausgestaltet ist, über eine sehr einfache Weise mit Informationen über sein automatisch gefahrenes Fahrzeug versorgt. Durch die vorliegende Erfindung ist es möglich, dass der Fahrer, welcher beispielsweise mit anderen Nebenaufgaben beschäftigt ist, nur durch kurze Blickzuwendungen auf die Anzeige über die aktuellen oder auch zukünftigen Vorgänge seines Fahrzeugs informiert wird. Durch dieses erfindungsgemäße Informationsangebot kann der Fahrer vorteilhafterweise das benötigte Vertrauen und Situationsbewusstsein aufbauen, um die automatische Fahrfunktion seines Fahrzeugs in angemessener Art und Weise nutzen zu können.

Die erfindungsgemäße Idee, eine Fahrsituation zu erfassen und darzustellen, indem in animierter Form einer von einer begrenzten Anzahl von Zuständen, welche diese Fahrsituation beschreiben, auf einer Anzeige dargestellt wird, kann dabei auch allgemein in beliebigen Verkehrsmitteln oder in allen Situationen, in denen Fahrgäste transportiert werden, eingesetzt werden. Die Anzeige kann dabei sowohl fest in dem jeweiligen Verkehrsmittel angebracht sein als auch die Anzeige eines Mobilgeräts (z.B. Smartphones, Tablet-PCs, Armbanduhr) darstellen. Beim Einsatz der vorliegenden Erfindung in beliebigen Verkehrsmitteln wird der jeweilige Nutzer des jeweiligen Verkehrsmittels über bevorstehende kinästhetische Veränderungen informiert und kann sich auf diese vorteilhafterweise entsprechend einstellen. So ist es beim Einsatz der vorliegenden Erfindung im Straßenbahn- oder U-Bahn- Verkehr denkbar, die Fahrgäste über die Darstellung auf der Anzeige rechtzeitig über einen bevorstehenden Bremsvorgang zu informieren. In gleicher Weise könnte die erfindungsgemäße Darstellung der Fahrsituation auf der Anzeige eines Mobilgeräts abgebildet werden, wobei der aktuelle Inhalt der Anzeige überschrieben wird, um den Nutzer auch während der Benutzung seines Mobilgeräts rechtzeitig über ein bevorstehendes Fahrmanöver des benutzten Verkehrsmittels zu informieren. Im Flugbetrieb können mit der vorliegenden Erfindung beispielsweise Informationen über bevorstehende Rollbewegungen dargestellt werden, so dass einerseits nicht befestigte Gegenstände rechtzeitig gesichert und andererseits der Sitzplatz rechtzeitig wieder eingenommen werden kann. Darüber hinaus kann die vorliegende Erfindung Personen mit Flugangst dabei helfen, ein besseres Verständnis über den gesamten Ablauf eines Fluges zu ermöglichen, um so mehr Vertrauen in die beteiligten technischen und menschlichen Akteure aufzubauen. Erfindungsgemäß dargestellte Zustände über bevorstehende Steig- und Sinkmanöver könnten zudem dabei helfen, einen rechtzeitigen Druckausgleich (z.B. durch Atemtechniken oder Kaubewegungen) vorzunehmen.

In der Seefahrt kann die vorliegende Erfindung in gleicher Weise, wie vorab für den Flugbetrieb beschrieben, eingesetzt werden. Dies gilt insbesondere für kleinere Schiffe, welche eine höhere Dynamik aufweisen. Da das Verhalten von Seefahrzeugen noch in wesentlich stärkerem Maße von Umweltbedingungen (insbesondere von Windverhältnissen) abhängt, kann die erfindungsgemäße Zustandsgruppe dahingehend erweitert werden, dass Zustände, welche bevorstehende Reaktionen (beispielsweise eine durch eine Bö oder einen starken Seegang verursachte starke Neigung des Schiffes) beschreiben, aufgenommen werden und damit auf der Anzeige angezeigt werden können. Diese zusätzlichen Zustände können beispielsweise anhand von Sensoren bestimmt werden, welche Windverhältnisse erfassen oder Informationen von menschlichen Beobachtern auswerten.

Im Folgenden wird die vorliegende Erfindung anhand bevorzugter erfindungsgemäßer Ausführungsformen im Detail mit Bezug zu den Figuren beschrieben.

In Fig. 1 ist eine erfindungsgemäße Anzeige dargestellt.

In Fig. 2 sind vier Symbole zur Darstellung des aktuellen Zustands abgebildet.

In Fig. 3 ist ein erfindungsgemäßes Fahrzeug mit einer erfindungsgemäßen Vorrichtung dargestellt.

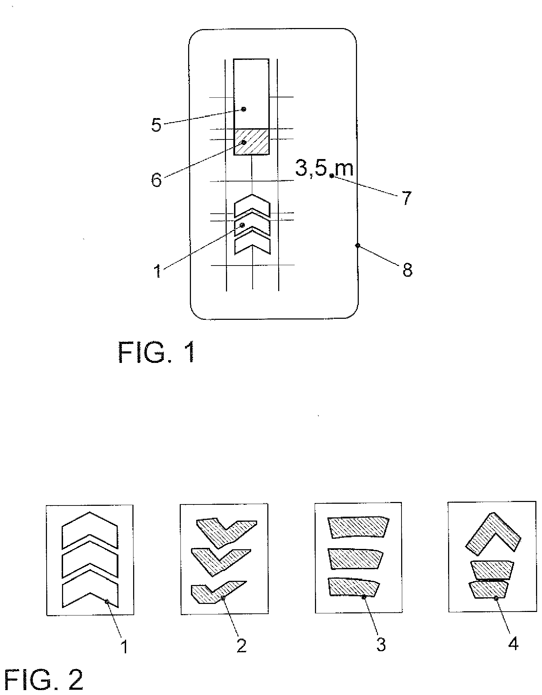

Auf der in Fig. 1 dargestellten erfindungsgemäßen Anzeige 8 ist ein Führungsfahrzeug 5 vor einem Symbol 1 dargestellt, wobei das Symbol 1 den Ort des eigenen Fahrzeugs repräsentiert und den aktuellen Zustand bezüglich einer Reaktion des Fahrzeugs auf das Führungsfahrzeug 5 beschreibt. Zusätzlich ist ein Bereich 6, welcher unmittelbar hinter dem Führungsfahrzeug 5 an das Führungsfahrzeug 5 angrenzt, besonders gekennzeichnet (in diesem Fall als schraffierte Fläche), um zu verdeutlichen, dass ein festgelegter Sicherheitsabstand nicht unterschritten wird. Schließlich ist der aktuelle Abstand 7 zwischen dem eigenen Fahrzeug und dem Führungsfahrzeug 5 abgebildet.

Das Führungsfahrzeug 5 und der den Sicherheitsabstand kennzeichnende Bereich 6 und/oder das den aktuellen Zustand beschreibende Symbol 1-4 und/oder der aktuelle Abstand 7 können immer an derselben Stelle der Anzeige 8 abgebildet werden. Dadurch gewöhnt sich der Betrachter vorteilhafterweise an die Art der Darstellung und kann so den aktuellen Zustand rasch erfassen.

Die aktuelle Systemaktion, d.h. die aktuelle Aktion oder der aktuelle Zustand des Systems, welches zum automatischen Fahren oder zur automatischen Längsführung des Fahrzeugs ausgestaltet ist, und damit die aktuelle Reaktion des Fahrzeugs auf das Führungsfahrzeug kann durch die in Fig. 2 dargestellten Symbole 1-4 beschrieben werden.

Dabei beschreibt das erste Symbol 1 die Systemaktion oder den Zustand, dass das Fahrzeug dem Führungsfahrzeug mit konstanter oder sich erhöhender Geschwindigkeit folgt. Das erste Symbol 1 beschreibt demnach die Systemaktion oder den Zustand des "Hinterherfahrens". Das zweite Symbol 2 beschreibt die Systemaktion oder den Zustand, dass das Fahrzeug dem Führungsfahrzeug mit sinkender Geschwindigkeit, d.h. das Fahrzeug wird abgebremst, folgt. Das dritte Symbol 3 beschreibt die Systemaktion oder den Zustand, dass das Fahrzeug steht und dem aktuell stehenden Führungsfahrzeug folgen wird, sobald sich das Führungsfahrzeug in Bewegung setzt. Schließlich beschreibt das vierte Symbol 4 die Systemaktion oder den Zustand, dass das Fahrzeug steht und demnächst anfahren wird, um dem sich gerade in Bewegung setzenden Führungsfahrzeug zu folgen. Wenn das Führungsfahrzeug 5 losfährt, benötigt das System einige Sekunden, bevor das Fahrzeug dem Führungsfahrzeug folgt, so dass das Fahrzeug in diesem Zustand noch steht, obwohl das Führungsfahrzeug 5 bereits fährt.

Während das Fahrzeug im ersten oder zweiten Zustand, angezeigt durch das erste Symbol 1 bzw. zweite Symbol 2, fährt, steht das Fahrzeug im dritten oder vierten Zustand, welcher durch das dritte Symbol 3 bzw. vierte Symbol 4 angezeigt wird. Während der dritte Zustand oder das dritte Symbol 30 symbolisiert, dass das System zur automatischen Längssteuerung des Fahrzeugs oder zum automatischen Fahren des Fahrzeugs aktiv ist, symbolisiert der vierte Zustand oder das vierte Symbol 4, dass das System nicht nur aktiv ist, sondern dass das Fahrzeug dem Führungsfahrzeug, welches sich gerade in Bewegung gesetzt hat, jetzt folgen wird.

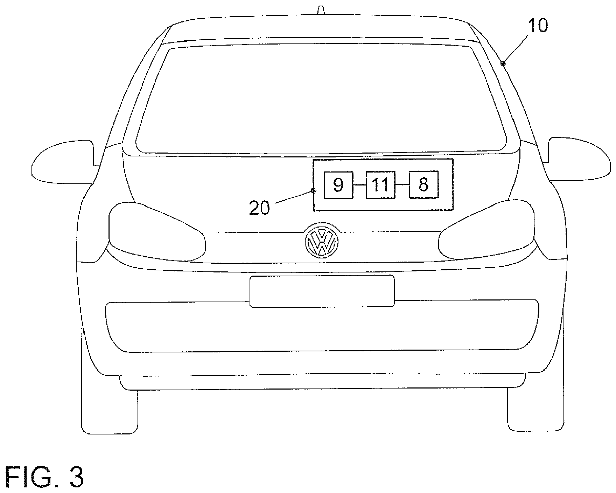

In Fig. 3 ist ein erfindungsgemäßes Fahrzeug 10 dargestellt, welches eine erfindungsgemäße Vorrichtung 20 umfasst. Das Fahrzeug 10 ist zur automatischen Längssteuerung oder zum automatischen Fahren ausgestaltet. Die erfindungsgemäße Vorrichtung 20 umfasst neben einer Steuerung 11 einen Sensor 9 und eine Anzeige 8. Mit dem Sensor 9 können Objekte im Umfeld des Fahrzeugs 10 und insbesondere das Führungsfahrzeug 5 erfasst werden. Die Vorrichtung 20 ist in der Lage, abhängig von den Ausgaben des Sensors einen aktuellen Zustand, welcher eine aktuelle Reaktion des Fahrzeugs 10 auf das Führungsfahrzeug 5 beschreibt, zu bestimmen und um diesen Zustand in animierter Form auf der Anzeige 8 darzustellen.

### Bezugszeichenliste

- 1: Symbol "Hinterherfahren"
- 2: Symbol "Bremsen"
- 3: Symbol "Bereitschaft"
- 4: Symbol "Losfahren"
- 5: Führungsfahrzeug
- 6: Sicherheitsbereich
- 7: Abstand
- 8: Anzeige
- 9: Sensor
- 10: Fahrzeug
- 11: Steuerung
- 20: Vorrichtung

## Patentansprüche

1. Vorrichtung für ein Fahrzeug (10), welches zur automatischen Längssteuerung ausgestaltet ist,
wobei die Vorrichtung (20) einen Sensor (9), eine Steuerung (11) und eine Anzeige (8) umfasst,
wobei der Sensor (9) ausgestaltet ist, um ein Führungsfahrzeug (5) zu erfassen, wobei das Führungsfahrzeug (5) ein direkt vor dem Fahrzeug (10) fahrendes Fahrzeug ist, wobei die Vorrichtung (20) ausgestaltet ist, um abhängig von Ausgaben des Sensors (9) einen aktuellen von zumindest vier Zuständen, welche eine aktuelle Reaktion des Fahrzeugs (10) auf das Führungsfahrzeug (5) beschreiben, zu bestimmen und um den aktuellen Zustand unterscheidbar von anderen der Zustände in animierter Form auf der Anzeige (8) darzustellen,
wobei die vier Zustände sind:
• das Fahrzeug (10) folgt dem Führungsfahrzeug (5) mit konstanter oder sich erhöhender Geschwindigkeit,
• das Fahrzeug (10) folgt dem Führungsfahrzeug (5) mit sinkender Geschwindigkeit,
• das Fahrzeug (10) wird dem aktuell stehenden Führungsfahrzeug (5) folgen, sobald das Führungsfahrzeug (5) losfährt, und
• das Fahrzeug (10) wird dem sich gerade in Bewegung setzenden Führungsfahrzeug (5) folgen.

2. Vorrichtung nach Anspruch 1, **dadurch gekennzeichnet, dass** die Vorrichtung (20) mittels des Sensors (9) einen Abstand (7) zwischen dem Führungsfahrzeug (5) und dem Fahrzeug (10) ermittelt und den Abstand (7) auf der Anzeige (8) darstellt.

3. Vorrichtung nach einem der vorhergehenden Ansprüche,
**dadurch gekennzeichnet,**
**dass** die Vorrichtung (20) ausgestaltet ist, um das Führungsfahrzeug (5) und das Fahrzeug (10) hintereinander animiert auf der Anzeige (8) darzustellen und um das Fahrzeug (10) in Form eines Symbols (1-4) darzustellen, welches den aktuellen Zustand beschreibt.

4. Vorrichtung nach Anspruch 3, **dadurch gekennzeichnet, dass** die Vorrichtung (20) ausgestaltet ist, um einen unmittelbar an das Führungsfahrzeug (5) angrenzenden und in Richtung des Fahrzeugs (10) liegenden Bereich (6) auf der Anzeige (8) als Sicherheitsbereich kenntlich zu machen, welcher einen Mindestabstand des automatisch fahrenden Fahrzeugs zu dem Führungsfahrzeug kennzeichnet.

5. Verfahren für ein Fahrzeug (10), welches zur automatischen Längssteuerung ausgestaltet ist, folgende Schritte umfassend:
Erfassen eines Führungsfahrzeugs (5), wobei das Führungsfahrzeug (5) ein direkt vor dem Fahrzeug (10) fahrendes Fahrzeug ist,
Bestimmen eines aktuellen von zumindest vier Zuständen, welche eine aktuelle Reaktion des Fahrzeugs (10) auf das Führungsfahrzeug (5) beschreiben, und
Darstellen des aktuellen Zustands unterscheidbar von anderen der Zustände in animierter Form auf einer Anzeige (8),
wobei die vier Zustände sind:
• das Fahrzeug (10) folgt dem Führungsfahrzeug (5) mit konstanter oder sich erhöhender Geschwindigkeit,
• das Fahrzeug (10) folgt dem Führungsfahrzeug (5) mit sinkender Geschwindigkeit,
• das Fahrzeug (10) wird dem aktuell stehenden Führungsfahrzeug (5) folgen, sobald das Führungsfahrzeug (5) losfährt, und
• das Fahrzeug (10) wird dem sich gerade in Bewegung setzenden Führungsfahrzeug (5) folgen.

6. Verfahren nach Anspruch 5, **dadurch gekennzeichnet, dass** ein Abstand (7) zwischen dem Führungsfahrzeug (5) und dem Fahrzeug (10) ermittelt wird und dass der Abstand (7) auf der Anzeige (8) dargestellt wird.

7. Verfahren nach Anspruch 5 oder 6,
**dadurch gekennzeichnet,**
**dass** das Führungsfahrzeug (5) und das Fahrzeug (10) hintereinander animiert auf der Anzeige (8) dargestellt werden und dass das Fahrzeug (10) in Form eines Symbols (1-4) dargestellt wird, welches den aktuellen Zustand beschreibt.

8. Verfahren nach Anspruch 7, **dadurch gekennzeichnet, dass** ein unmittelbar an das Führungsfahrzeug (5) angrenzender und in Richtung des Fahrzeugs (10) liegender Bereich (6) auf der Anzeige (8) als Sicherheitsbereich kenntlich gemacht wird, welcher einen Mindestabstand des automatisch fahrenden Fahrzeugs zu dem Führungsfahrzeug kennzeichnet.

## Claims

1. Device for a vehicle (10) which is configured for automatic longitudinal control,
the device (20) comprising a sensor (9), a control (11) and a display (8),
the sensor (9) being configured for detecting a guide vehicle (5), the guide vehicle (5) being a vehicle driving directly in front of the vehicle (10),
the device (20) being configured for determining, in dependence on outputs of the sensor (9), a current one of at least four states which describe a current response of the vehicle (10) to the guide vehicle (5) and for displaying the current state distinguishably from other ones of the states in animated form on the display (8),
the four states being:
• the vehicle (10) follows the guide vehicle (5) with a constant or increasing speed,
• the vehicle (10) follows the guide vehicle (5) with a decreasing speed,
• the vehicle (10) will follow the guide vehicle (5) currently standing as soon as the guide vehicle (5) drives off, and
• the vehicle (10) will follow the guide vehicle (5) just starting to move.

2. Device according to Claim 1, **characterized in that** the device (20) determines by means of the sensor (9) a distance (7) between the guide vehicle (5) and the vehicle (10) and displays the distance (7) on the display (8).

3. Device according to one of the preceding claims,
**characterized in that**
the device (20) is configured for displaying the guide vehicle (5) and the vehicle (10) behind one another animated on the display (8) and for displaying the vehicle (10) in the form of a symbol (1-4) which describes the current state.

4. Device according to Claim 3, **characterized in that** the device (20) is configured for identifying an area (6) directly adjoining the guide vehicle (5) and lying in the direction of the vehicle (10) on the display (8) as safety area which marks a minimum distance of the vehicle driving automatically from the guide vehicle.

5. Method for a vehicle (10) which is configured for automatic longitudinal control, comprising the following steps:
detecting a guide vehicle (5), the guide vehicle (5) being a vehicle driving directly in front of the vehicle (10),
determining a current one of at least four states which describe a current response of the vehicle (10) to the guide vehicle (5), and
displaying the current state distinguishably from other ones of the states in animated form on a display (8),
the four states being:
• the vehicle (10) follows the guide vehicle (5) with a constant or increasing speed,
• the vehicle (10) follows the guide vehicle (5) with a decreasing speed,
• the vehicle (10) will follow the guide vehicle (5) currently standing as soon as the guide vehicle (5) drives off, and
• the vehicle (10) will follow the guide vehicle (5) just starting to move.

6. Method according to Claim 5, **characterized in that** a distance (7) between the guide vehicle (5) and the vehicle (10) is determined and that the distance (7) is displayed on the display (8).

7. The method according to Claim 5 or 6,
**characterized in that**
the guide vehicle (5) and the vehicle (10) are displayed behind one another animated on the display (8) and that the vehicle (10) is displayed in the form of a symbol (1-4) which describes the current state.

8. Method according to Claim 7, **characterized in that** an area (6) directly adjoining the guide vehicle (5) and lying in the direction of the vehicle (10) is identified on the display (8) as safety area which marks a minimum distance of the vehicle driving automatically from the guide vehicle.

## Revendications

1. Dispositif pour un véhicule (10) qui est configuré en vue d'une commande longitudinale automatique,
le dispositif (20) comprenant un capteur (9), une commande (11) et un affichage (8),
le capteur (9) étant configuré pour détecter un véhicule de guidage (5), le véhicule de guidage (5) étant un véhicule se déplaçant directement devant le véhicule (10), le dispositif (20) étant configuré pour déterminer, indépendamment des sorties du capteur (9), un état actuel parmi au moins quatre états, qui décrivent une réaction actuelle du véhicule (10) au véhicule de guidage (5), et pour représenter l'état actuel sur l'affichage (8) sous forme animée de manière distinctive par rapport aux autres états,
les quatre états étant :
- le véhicule (10) suit le véhicule de guidage (5) avec une vitesse constante ou croissante,
- le véhicule (10) suit le véhicule de guidage (5) avec une vitesse décroissante,
- le véhicule (10) suivra le véhicule de guidage actuellement à l'arrêt (5) dès que le véhicule de guidage (5) se mettra en mouvement, et
- le véhicule (10) suivra le véhicule de guidage (5) qui se met justement en mouvement.

2. Dispositif selon la revendication 1, **caractérisé en ce que** le dispositif (20) détermine, au moyen du capteur (9), une distance (7) entre le véhicule de guidage (5) et le véhicule (10) et affiche la distance (7) sur l'affichage (8).

3. Dispositif selon l'une quelconque des revendications précédentes,
**caractérisé en ce que**
le dispositif (20) est configuré pour représenter le véhicule de guidage (5) et le véhicule (10) sous forme animée l'un derrière l'autre sur l'affichage (8) et pour représenter le véhicule (10) sous la forme d'un symbole (1-4) qui décrit l'état actuel.

4. Dispositif selon la revendication 3, **caractérisé en ce que** le dispositif (20) est configuré pour mettre en évidence sur l'affichage (8), en tant que zone de sécurité, une zone (6) directement adjacente au véhicule de guidage (5) et située dans la direction du véhicule (10), laquelle caractérise une distance minimale du véhicule à conduite automatique par rapport au véhicule de guidage.

5. Procédé pour un véhicule (10) qui est configuré en vue d'une commande longitudinale automatique, comprenant les étapes suivantes :
détection d'un véhicule de guidage (5), le véhicule de guidage (5) étant un véhicule conduisant directement devant le véhicule (10),
détermination d'un état actuel parmi au moins quatre états, qui décrivent une réaction actuelle du véhicule (10) au véhicule de guidage (5), et
représentation de l'état actuel sur un affichage (8) sous forme animée de manière distinctive par rapport aux autres états,
les quatre états étant :
- le véhicule (10) suit le véhicule de guidage (5) avec une vitesse constante ou croissante,
- le véhicule (10) suit le véhicule de guidage (5) avec une vitesse décroissante,
- le véhicule (10) suivra le véhicule de guidage actuellement à l'arrêt (5) dès que le véhicule de guidage (5) se mettra en mouvement, et
- le véhicule (10) suivra le véhicule de guidage (5) qui se met justement en mouvement.

6. Procédé selon la revendication 5, **caractérisé en ce qu'**une distance (7) entre le véhicule de guidage (5) et le véhicule (10) est déterminée et **en ce que** la distance (7) est illustrée sur l'affichage (8).

7. Procédé selon la revendication 5 ou 6,
**caractérisé en ce que** le véhicule de guidage (5) et le véhicule (10) sont illustrés sous forme animée l'un derrière l'autre sur l'affichage (8) et **en ce que** le véhicule (10) est illustré sous la forme d'un symbole (1-4) qui décrit l'état actuel.

8. Procédé selon la revendication 7, **caractérisé en ce qu'**une zone (6) directement adjacente au véhicule de guidage (5) et située dans la direction du véhicule (10) est mise en évidence sur l'affichage (8) en tant que zone de sécurité, laquelle caractérise une distance minimale du véhicule à conduite automatique par rapport au véhicule de guidage.
